# EUROPÄISCHE PATENTANMELDUNG

(11) **EP 4 254 083 A1**
(43) Veröffentlichungstag der Anmeldung: **04.10.2023**
(21) Anmeldenummer: 22165540.0
(22) Anmeldetag: 30.03.2022
(51) Int. Cl.: G05B 13/02

(54) **VERFAHREN ZUR PARAMETRISIERUNG EINES ÜBERWACHUNGSSYSTEMS, PARAMETRISIERUNGSVORRICHTUNG UND ÜBERWACHUNGSSYSTEM**

(71) Anmelder: Siemens Aktiengesellschaft, 80333 München (DE)
(72) Erfinder: Otte, Clemens, 81739 München (DE)
(74) Vertreter: Siemens Patent Attorneys

(57) **Zusammenfassung**

Die vorliegende Erfindung betrifft eine automatische Konfiguration eines Überwachungssystems für einen industriellen Prozess. Hierzu wird ein initialer Parametrisierungsvektor zur Konfiguration des Überwachungssystems mittels eines gradientenfreies Optimierungsverfahrens iterativ optimiert.

## Beschreibung

Die vorliegende Erfindung betrifft ein Verfahren zur Parametrisierung eines Überwachungssystems für einen industriellen Prozess. Die vorliegende Erfindung betrifft ferner eine Parametrisierungsvorrichtung für ein Überwachungssystem eines industriellen Prozesses sowie ein Überwachungssystem für einen industriellen Prozess.

### Hintergrund

Obwohl die vorliegende Erfindung im Nachfolgenden unter Bezugnahme auf einen additiven Fertigungsprozess, wie beispielsweise 3D-Druck, beschrieben wird, ist die Erfindung nicht hierauf beschränkt. Vielmehr kann der erfindungsgemäße Ansatz auch auf beliebige industrielle Systeme mit einer Prozessüberwachung angewendet werden.

Für eine industrielle Prozessüberwachung werden in der Regel Signale, wie beispielsweise Bilder oder Zeitreihen weiterer sensorisch erfasster Parameter ausgewertet, um Fehler oder Störungen in dem Prozess automatisiert zu detektieren. Wird beispielsweise bei einem additiven Fertigungsprozess ein Bauelement schichtweise aufgebaut, wobei für jede Schicht zunächst eine Substanz aufgebracht und anschließend an vorbestimmte Position ausgehärtet wird, so kann es beispielsweise beim Aufbringen einer Schicht zu Kratzern oder anderen Defekten kommen. Derartige Störungen sollen möglichst automatisiert erkannt werden.

Für eine solche Prozessüberwachung kann beispielsweise der Beschichtungsprozess optisch überwacht und ausgewertet werden. Hierbei sind einerseits klassische Signal- und Bildverarbeitungsalgorithmen möglich, welche einzelne Pixelwerte analysieren und die Pixel entlang einer zu erwartenden Kratzerrichtung integrieren und bewerten. Derartige Algorithmen müssen in der Regel jedoch aufwendig parametrisiert werden. Hierzu müssen zahlreiche einzelne Parameter individuell eingestellt und aufeinander abgestimmt werden.

Darüber hinaus kommen auch maschinell lernende Verfahren, insbesondere neuronale Netze, wie zum Beispiel neuronale Faltungsnetze (Convlutional Neural Networks, CNN) o. ä., zum Einsatz. Hierbei wird die Erkennungslogik maschinell anhand von Trainingsbeispielen trainiert, Diese maschinelle lernenden Verfahren erfordern jedoch in der Regel eine sehr große Menge an Trainingsdaten, in denen die zu erkennenden Fehler manuell markiert sein müssen. Darüber hinaus ist auch die Interpretation und damit eine Überprüfung derartiger Ansätze in der Regel schwer bis unmöglich. Ferner besteht bei derartigen maschinell lernenden Verfahren das Risiko, dass diese Verfahren nur auf Fehler ansprechen, für welche sie speziell trainiert worden sind.

Vor diesem Hintergrund ist eine automatische Parametrisierung für eine Prozessüberwachung wünschenswert. Insbesondere ist eine automatisierte Parametrisierung für eine Prozessüberwachung wünschenswert, bei welcher die Prozessüberwachung auf einem Verfahren beruht, welches zuverlässig validiert und nachvollziehbar überprüft werden kann.

### Offenbarung der Erfindung

Die vorliegende Erfindung schafft ein Verfahren zur Parametrisierung eines Überwachungssystems für einen industriellen Prozess, eine Parametrisierungsvorrichtung für ein Überwachungssystem eines industriellen Prozesses sowie ein Überwachungssystem für einen industriellen Prozess mit den Merkmalen der unabhängigen Patentansprüche. Weitere vorteilhafte Ausführungsformen sind Gegenstand der abhängigen Patentansprüche.

Gemäß einem ersten Aspekt ist ein Verfahren zur Parametrisierung eines Überwachungssystems für einen industriellen Prozess vorgesehen. Das Verfahren umfasst einen Schritt zum Bereitstellen eines initialen Parametrisierungsvektors. Dieser Parametrisierungsvektor kann mehrere Werte zur Parametrisierung eines Überwachungsalgorithmus umfassen. Das Verfahren umfasst weiterhin einen Schritt zum Ermitteln eines vorbestimmten Gütekriteriums für den initialen Parametrisierungsvektor. Ferner umfasst das Verfahren einen Schritt zum Ausführen eines gradientenfreien Optimierungsverfahrens für den initialen Parametrisierungsvektor. Hierdurch wird ein optimierter Parametrisierungsvektor erhalten. Durch das Ausführen der gradientenfreien Optimierung wird der initiale Parametrisierungsvektor bezüglich des vorbestimmten Gütekriterium optimiert. Schließlich umfasst das Verfahren einen Schritt zum Konfigurieren des Überwachungssystems basierend auf dem optimierten Parametrisierungsvektor.

Gemäß einem weiteren Aspekt ist eine Parametrisierungsvorrichtung für ein Überwachungssystem eines industriellen Prozesses vorgesehen. Die Parametrisierungsvorrichtung umfasst eine Verarbeitungseinrichtung. Die Verarbeitungseinrichtung ist dazu ausgelegt, einen initialen Parametrisierungsvektor zu empfangen. Weiterhin ist die Verarbeitungseinrichtung dazu ausgelegt, ein vorbestimmtes Gütekriterium für den initialen Parametrisierungsvektor zu ermitteln. Die Verarbeitungseinrichtung des ferner dazu ausgelegt, eine gradientenfreie Optimierung des initialen Parametrisierungsvektors auszuführen. Hierdurch wird ein optimierter Parametrisierungsvektor erhalten. Durch die gradientenfreie Optimierung wird der Parametrisierungsvektor bezüglich des vorbestimmten Gütekriteriums optimiert. Schließlich ist die Verarbeitungseinrichtung dazu ausgelegt, den optimierten Parametrisierungsvektor bereitzustellen.

Gemäß noch einem weiteren Aspekt ist ein Überwachungssystem für einen industriellen Prozess vorgesehen. Das Überwachungssystem umfasst eine Eingangsschnittstelle, eine Überwachungseinrichtung und eine erfindungsgemäße Parametrisierungsvorrichtung. Die Eingangsschnittstelle dazu ausgelegt, Sensordaten des industriellen Prozesses zu empfangen. Überwachungseinrichtung ist dazu ausgelegt, den industriellen Prozess unter Verwendung der empfangenen Sensordaten zu überwachen. Die Parametrisierungsvorrichtung ist dazu ausgelegt, die Überwachungseinrichtung unter Verwendung des optimierten Parametrisierungsvektors zu konfigurieren.

### Vorteile der Erfindung

Die vorliegende Erfindung beruht auf der Erkenntnis, dass für automatisierte industrielle Prozesse in der Regel auch eine auf den industriellen Prozess abgestimmte automatisierte Prozessüberwachung von entscheidender Bedeutung ist. Hierbei kommt der Konfiguration bzw. Parametrisierung einer solchen automatisierten Prozessüberwachung eine entscheidende Bedeutung zu. Maschinell lernende Systeme, welche beispielsweise unter Verwendung eines neuronalen Netzwerkes Fehler oder Störungen in dem industriellen Prozess detektieren können, erfordern in der Regel eine sehr aufwändige Trainings- oder Lernphase. Darüber hinaus handelt es sich bei derartigen Systemen in der Regel um "Blackbox"-Systeme, deren Verhalten nicht oder nur sehr schwer nachvollziehbar ist. Darüber hinaus sind derartige Ansätze in der Regel sehr komplex und daher in der Implementierung daher relativ rechenzeitintensiv.

Klassische Signal- oder Bildverarbeitungsverfahren für eine industrielle Prozessüberwachung können in der Regel mit geringeren Hardwareanforderungen und/oder weniger Rechenzeitbedarf implementiert werden. Diese Verfahren basieren in der Regel auf Algorithmen, die durch eine Vielzahl von individuellen Parametern auf das jeweilige System angepasst werden müssen. Daher ist eine manuelle Konfiguration derartige Algorithmen, bei welcher die einzelnen Parameter individuell durch einen Benutzer ermittelt werden müssen, sehr aufwendig und bei komplexen Systemen gegebenenfalls nahezu unmöglich.

Es ist daher eine Idee der vorliegenden Erfindung, eine automatisierte Parametrisierung von Verfahren zur Prozessüberwachung zu schaffen. Insbesondere soll die erfindungsgemäße Parametrisierung für eine Prozessüberwachung auch für komplexe Überwachungsalgorithmen eine verlässliche und optimierte Parametrisierung bereitstellen können. Hierbei sollen die erforderlichen Parameter zur Konfiguration der Prozessüberwachung auf Basis eines möglichst geringen Umfangs an Trainingsdaten oder ähnlichem ermittelt werden können. Diese Weise soll eine Parametrisierung für eine nachvollziehbare und damit auch überprüfbare Prozessüberwachung durch ein automatisiertes Parametrisierungssystem geschaffen werden.

Hierzu ist es erfindungsgemäß vorgesehen, die Daten für eine solche Parametrisierung eines industriellen Überwachungssystems durch eine gradientenfreie Optimierung eines Vektors mit den zu konfigurieren Parametern durchzuführen. Auf diese Weise ist es auch möglich, die Parametrisierung des Überwachungssystems für einen industriellen Prozess zu optimieren, selbst wenn der Gradient einer Gütefunktion für einen derartigen industriellen Prozess nicht bestimmt werden kann, weil beispielsweise eine derartige Gütefunktion eine nicht differenzierbare Funktion darstellt.

Somit kann nahezu jede beliebige Funktion zur Überwachung eines industriellen Prozesses, welche durch Spezifikation mehrerer Konfigurationsparameter auf den jeweiligen industriellen Prozess und die damit verbundenen Rahmenbedingungen angepasst werden kann, durch die erfindungsgemäße automatische Parametrisierung konfiguriert und für die jeweiligen Rahmenbedingungen optimiert werden. Der Parametrisierungsvektor umfasst dabei als Elemente jeweils die einzelnen Parameter zur Parametrisierung der eingesetzten Überwachungsfunktion. Durch die Variation der Werte der einzelnen Elemente des Parametrisierungsvektors und der anschließenden Analyse des sich damit ergebenden Gütekriterium kann ein Einfluss der jeweiligen Variation der Werte in dem Parametrisierungsvektor auf die Gütefunktion ermittelt werden.

Insbesondere wenn eine große Anzahl von Variationen in dem Parametrisierungsvektor verwendet wird, können Tendenzen bei der Variation in den einzelnen Elementen des Parametrisierungsvektors hinsichtlich ihres Einflusses auf die Gütefunktion erkannt werden. Daraufhin kann das jeweilige Element in dem Parametrisierungsvektor optimiert werden. Werden bei der Variation der einzelnen Elemente in dem Parametrisierungsvektor hierbei viele unterschiedliche Werte für die einzelnen Elemente des Parametrisierungsvektors verwendet, so kann auf diese Weise selbst bei nicht differenzierbaren Gütefunktionen ein optimierter Wert ermittelt werden. Daher liegt eine Grundidee der vorliegenden Erfindung insbesondere darin, die Werte des Parametrisierungsvektors zu variieren und dabei eine große Anzahl von Varianten des Parametrisierungsvektors zu erzeugen, um die Vielzahl von Parametrisierungsvektor und jeweils hinsichtlich der Gütefunktion zu evaluieren.

Als Gütefunktion kann grundsätzlich jede beliebige Funktion genutzt werden, welche den jeweiligen industriellen Prozess hinsichtlich einer Prozesseigenschaften charakterisiert. Beispielsweise kann ein Algorithmus zur Überwachung des industriellen Prozesses jeweils einen Prozessschritt und/oder ein Resultat des industriellen Prozesses als fehlerhaft oder fehlerfrei identifizieren. In einem solchen Fall kann beispielsweise die Gütefunktion die entsprechende Parametrisierung dahingehend bewerten, ob der entsprechende Prozessschritt bzw. das Resultat des industriellen Prozesses korrekt als fehlerhaft oder fehlerfrei identifiziert worden ist. Zum Beispiel kann die Gütefunktion hierbei ein Verhältnis zwischen korrekten Bewertungen und fehlerhaften Bewertungen angeben. Hierbei kann eine fehlerhafte Bewertung beispielsweise eine Klassifizierung eines fehlerfreien Resultates als Fehler oder auch umgekehrt ein fehlerbehaftetes Resultat als fehlerfrei umfassen. Somit kann zum Beispiel ein Parametrisierungsvektor dahingehend optimiert werden, dass für einen Satz vorgegebener Testdaten die Gütefunktion jeweils optimiert wird, d. h. möglichst viele Testdatensätze korrekt als fehlerbehaftet bzw. fehlerfrei identifiziert werden.

Gemäß einer Ausführungsform umfasst die gradientenfreie Optimierung eine Partikelschwarmoptimierung (Particle Swarm Opimization), ein Verfahren der differentiellen Evolution Differential Evolution) oder einen anderen generischen Algorithmus zur gradientenfreien Optimierung des Parametrisierungsvektors. Grundsätzlich können auch beliebige andere geeignete Verfahren zur gradientenfreien Optimierung eingesetzt werden. Insbesondere durch die Nutzung bereits existierender gradientenfreier Optimierungsverfahren kann die automatisierte Ermittlung von optimierten Parameter für die Konfiguration des Überwachungssystems auf einfache Weise effizient implementiert werden.

Gemäß einer Ausführungsform umfasst die gradientenfreie Optimierung einen Schritt zum Variieren der Werte des Parametrisierungsvektors und einen Schritt zum Ermitteln des vorbestimmten Gütekriteriums für den jeweiligen Parametrisierungsvektor. Diese beiden Schritte können iterativ so lange wiederholt werden, bis ein vorbestimmtes Abbruchkriterium erfüllt ist. Das vorbestimmte Abbruchkriterium kann beispielsweise ein Überschreiten oder Erreichen eines Schwellwerts für das vorbestimmte Gütekriterium umfassen. Hierdurch werden entsprechend Werte für die Parametrisierung des Überwachungssystems gewonnen, die die vorgegebenen Bedingungen für die jeweilige Güte erfüllen.

Gemäß einer Ausführungsform kann die gradientenfreie Optimierung in jedem Iterationsschritt mehrere Parametrisierungsvektoren parallel variieren und hierbei für jede der mehreren Variationen das vorbestimmte Gütekriterium ermitteln. Auf diese Weise kann eine große Anzahl von Variationen des Parametrisierungsvektors innerhalb einer relativ geringen Verarbeitungszeit überprüft werden. Hierdurch kann die Effizienz der automatisierten Ermittlung für die Parametrisierung gesteigert werden. Insbesondere können durch das parallele Optimieren mit mehreren Parametervariationen auch mehrere unterschiedliche Maxima identifiziert werden.

Gemäß einer Ausführungsform umfasst der initiale Startvektor einen zufällig generierten Startvektor, einen benutzerdefinierten Startvektor oder einen zuvor abgespeicherten Startvektor. Sind bereits aus vergleichbaren, beispielsweise ähnlichen Systemen, oder aus früheren Parametrisierungen geeignete initiale Parametrisierungsvektoren verfügbar, so können diese in einer Datenbasis gespeichert und bereitgestellt werden. Beispielsweise können solche geeignete initialen Parametrisierungsvektoren lokal in einem Speicher abgespeichert werden. Aber auch das Bereitstellen von geeigneten initialen Parametrisierungsvektoren durch eine entfernte Speichervorrichtung, beispielsweise in einer Cloud oder ähnlichem ist möglich. Zum Beispiel können in einer solchen Cloud oder einer anderen entfernten Speichervorrichtung auch die Resultate von optimierten Parametrisierungsvektor vergleichbarer Systeme abgespeichert werden. Alternativ kann auch ein Benutzer, insbesondere ein erfahrener Benutzer, gegebenenfalls manuell initiale Werte für einen Parametrisierungsvektor vorgeben. Hierbei kann zum Beispiel auf die Erfahrung eines Benutzers bei der Parametrisierung zurückgegriffen werden. Liegen keine abgespeicherten oder manuellen initialen Werte für eine Parametrisierungsvektor vor, so kann alternativ auch ein beliebiger, beispielsweise zufälliger Parametrisierungsvektor als initialer Parametrisierungsvektor genutzt werden.

Gemäß einer Ausführungsform umfasst das vorbestimmten Gütekriteriums eine Erkennungsrate für einen vorgegebenen Testdatensatz. Beispielsweise kann ein solcher Testdatensatz Sensorwerte eines industriellen Prozesses sowie die hierzu korrespondierenden Überwachungsergebnisse umfassen. Die Daten derartiger Testdatensätze können beispielsweise zuvor anhand von realen praktischen Systemen gewonnen werden. Zusätzlich oder alternativ können die Testdatensätze auch Daten aus Simulationen umfassen. Durch die Verwendung von definierten Testdatensätzen kann dabei die Güte der jeweiligen Parametrisierungen objektiv bewertet werden.

Gemäß einer Ausführungsform umfasst das vorbestimmten Gütekriteriums eine Erkennungsrate von realen Fehlern in einem operationellen industrielen Prozess. Beispielsweise kann hierzu ein reales industrielles System betrieben werden, sodass als Eingangsgrößen reale Sensordaten bereitgestellt werden, welche entsprechend der jeweiligen Parametrisierungsvektoren ausgewertet werden. Hierbei können die Resultate der jeweiligen Parametrisierungen mit den tatsächlichen Ergebnissen des entsprechenden industriellen Prozesses verglichen werden, um die jeweilige Güte der entsprechenden Parametrisierungen zu ermitteln.

Gemäß einer Ausführungsform umfasst das vorbestimmte Gütekriterium eine Rückmeldung von einem Benutzer. Beispielsweise können die zu den jeweiligen Eingangswerten für einen Bewertungsalgorithmus korrespondierenden Resultate in dem industriellen Prozess durch einen Benutzer spezifiziert werden. Der Benutzer kann beispielsweise zu den jeweiligen Eingangsdaten eines Testdatensatzes manuell spezifizieren, ob das entsprechende Ergebnis fehlerfrei oder fehlerbehaftet ist. Dieses manuell spezifizierte Ergebnis kann daraufhin mit dem Resultat der entsprechenden Parametrisierung verglichen werden und hieraus die jeweilige Gütefunktion bestimmt werden.

Gemäß einer Ausführungsform wird das Verfahren zur Parametrisierung des Überwachungssystems bei einer erstmaligen Initialisierung und/oder durch eine manuelle Triggerung ausgeführt. Beispielsweise kann die automatische Parametrisierung am Ende eines Herstellungs- oder Fertigungsprozesses für eine Anlage ausgeführt werden. Gegebenenfalls kann auch jeweils beim Neustart einer solchen Anlage zunächst eine automatische Parametrisierung erfolgen. Ferner ist es auch möglich, die Parametrisierung regelmäßig, beispielsweise innerhalb vorgegebener Zeitintervalle auszuführen. Ferner kann die Parametrisierung auch beispielsweise manuell durch einen Benutzer gestartet werden, falls beispielsweise festgestellt wird, dass die aktuelle Parametrisierung nicht den gewünschten Anforderungen entspricht.

Gemäß einer Ausführungsform umfasst die Parametrisierungsvorrichtung eine Speichereinrichtung. Die Speichereinrichtung ist dazu ausgelegt, Testdaten für die Ermittlung des vorbestimmten Gütekriteriums bereitzustellen. Hierbei können sich insbesondere bei schrittweise um die bereits zuvor beschriebenen Testdaten handeln.

Gemäß einer Ausführungsform umfasst das Überwachungssystem für den industriellen Prozess eine optischen Erfassungseinrichtung. Diese optische Erfassungseinrichtung ist dazu ausgelegt, Bilddaten des industrielen Prozesse zu erfassen. Ferner kann die optische Erfassungseinrichtung die erfassten Bilddaten an der Eingangsschnittstelle des Überwachungssystems bereitstellen. Beispielsweise kann es sich bei der optischen Erfassungseinrichtung um ein System mit einer oder mehrerer Kameras handeln, welche Bilddaten des industriellen Prozesses bereitstellen.

Gemäß einer Ausführungsform umfasst der industrielle Prozess einen additiven Fertigungsprozess und/oder einen Beschichtungsprozess. Beispielsweise kann es sich bei dem additiven Fertigungsprozess um einen als 3D-Druck bekannten Fertigungsprozess handeln. Hierbei kann beispielsweise ein Objekt durch schichtweisen Aufbau gefertigt werden. In diesem Fall kann zum Beispiel nach dem Auftragen jeweils einer Schicht eine Bewertung erfolgen, ob die jeweilige Schicht korrekt aufgetragen wurde, oder beim Auftrag der Schicht ein Fehler aufgetreten ist. Analog kann auch bei einem Beschichtungsprozess der Auftrag der Beschichtung entsprechend bewertet werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1: eine schematische Darstellung zur Veranschaulichung einer Überwachung eines industriellen Prozesses gemäß einer Ausführungsform;
- Figur 2: eine schematische Darstellung eines Blockschaubilds eines Überwachungssystems gemäß einer Ausführungsform;
- Figur 3: eine schematische Darstellung eines Blockschaubilds einer Parametrisierungsvorrichtung gemäß einer Ausführungsform; und
- Figur 4: ein Ablaufdiagramm, wie es einem Verfahren zur Parametrisierung eines Überwachungssystems gemäß einer Ausführungsform zugrunde liegt.

### Beschreibung von Ausführungsformen

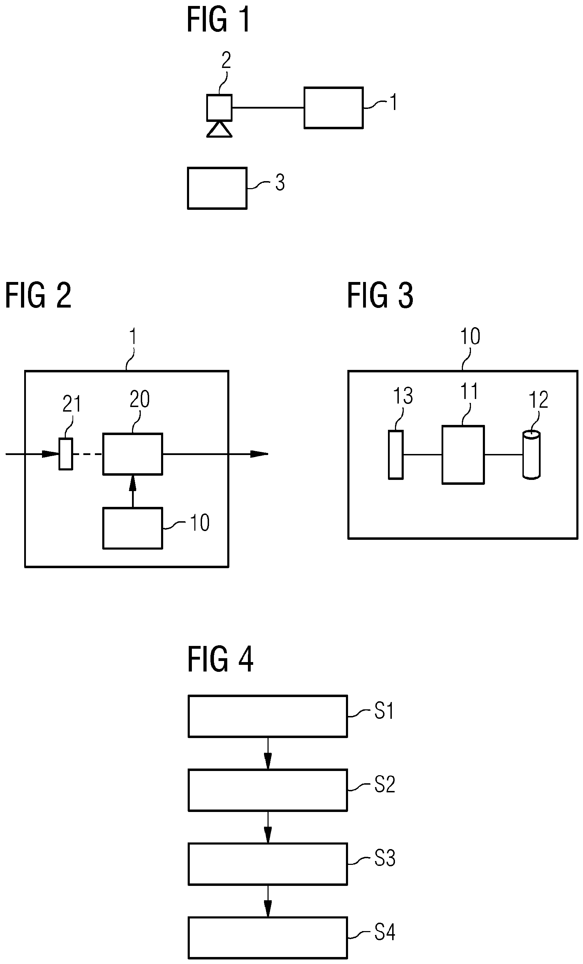

Figur 1 zeigt eine schematische Darstellung zur Veranschaulichung der Überwachung eines industriellen Prozesses 3 gemäß einer Ausführungsform. Bei dem hierbei dargestellten industriellen Prozess 3 kann es sich grundsätzlich um einen beliebigen industriellen Prozess handeln, der überwacht werden soll. Der im Nachfolgenden beschriebene Prozess einer additiven Fertigung oder einer Beschichtung dient dabei lediglich als Beispiel und stellt keine Einschränkung der vorliegenden Erfindung dar. Grundsätzlich ist die vorliegende Erfindung auf beliebige industrielle Prozesse anwendbar, welche mittels Sensoren, beispielsweise optisch oder in Form von Zeitreihen, überwacht werden können.

Der industrielle Prozesse 3 kann beispielsweise mittels eines oder mehrerer Sensoren 2 überwacht werden. Die von dem oder den Sensoren 2 bereitgestellten Sensordaten können daraufhin einem Überwachungssystem 1 zur Auswertung bereitgestellt werden.

Handelt es sich bei dem industriellen Prozess 3 beispielsweise um einen Prozess für eine additive Fertigung, bei welchem ein Bauelement durch Auftrag und Verfestigung mehrerer übereinander angeordneter Schichten hergestellt werden soll, so kann beispielsweise jeweils der Auftrag einer neuen Schicht mittels geeigneter Sensoren 2 überwacht und durch das Überwachungssystem 1 ausgewertet werden. Hierzu kann es sich bei den Sensoren 2 zum Beispiel um eine Kamera oder ein Kamerasystem handeln, welches jeweils nach dem Auftrag einer weiteren Schicht Bilddaten bereitstellt, die von dem Überwachungssystem 1 ausgewertet werden können. Auf diese Weise können zum Beispiel Kratzer, Beschädigungen, Verunreinigungen o. ä. in der jeweils neu aufgetragenen Schicht detektiert werden. Analog kann auch bei einem anderen Beschichtungsprozess die aufgetragene Beschichtung beispielsweise mittels optischer Sensoren 2 erfasst und durch das Überwachungssystem 1 ausgewertet werden.

Figur 2 zeigt eine schematische Darstellung eines Blockschaubilds eines Überwachungssystems 1 gemäß einer Ausführungsform. Das Überwachungssystem 1 kann beispielsweise eine Eingangsschnittstelle 21 umfassen, welche Daten von einem oder mehreren Sensoren 2 empfängt und an eine Überwachungseinrichtung 20 weiterleitet. Gegebenenfalls können die empfangenen Daten zwischengespeichert oder vorverarbeitet werden. Die Überwachungseinrichtung 20 wertet die von den Sensoren 2 empfangenen Daten aus. Hierbei können beispielsweise Störungen oder Fehler in dem industriellen Prozess 3 detektiert werden.

Ebenso ist es beispielsweise möglich, unter Verwendung der von den Sensoren 2 empfangenen Daten eine korrekte Funktion des industriellen Prozesses 3 festzustellen und/oder zu bestimmen, dass ein in dem industriellen Prozess 3 gefertigtes Produkt einen fehlerfreien Zustand aufweist.

Zur Überwachung des industriellen Prozesses 3 können beispielsweise die von dem oder den Sensoren 2 bereitgestellten Sensordaten mittels eines geeigneten Algorithmus ausgewertet werden. Zum Beispiel können zu Überwachung eines additiven Fertigungsprozesses oder eines Beschichtungsvorganges Bilddaten von einer Kamera oder einem Kamerasystem pixelweise ausgewertet werden. So können zum Beispiel zur Erkennung von Kratzern in einer aufgetragenen Schicht die Pixel entlang einer zu erwartenden Kratzerrichtung aufintegriert werden und die entsprechenden Summen- bzw. Mittelwert in orthogonaler Richtung ausgewertet werden. Hierzu müssen die jeweils eingesetzten Algorithmen für die Überwachung an den entsprechenden industriellen Prozess 3 sowie die im jeweiligen Fall vorherrschenden Rahmenbedingungen wie beispielsweise Beleuchtungssituation, Reflexionseigenschaften der Beschichtung, zu erwartende Kratzer, eingesetzte Sensoren 2, etc. angepasst werden.

Da die konkrete Konfiguration einer solchen Überwachungseinrichtung 20 und insbesondere der dabei eingesetzten Algorithmen aufgrund der relativ großen Anzahl von einzustellenden Parametern sehr komplex und aufwendig ist, ist für eine derartige Konfiguration bzw. Parametrisierung der Algorithmen eine Parametrisierungsvorrichtung 10 vorgesehen. Diese Parametrisierungsvorrichtung 10 ermittelt automatisch einen Vorschlag für eine optimale Konfiguration bzw. Parametrisierung der Überwachungseinrichtung 20, insbesondere der in der Überwachungseinrichtung 20 eingesetzten Algorithmen.

Figur 3 zeigt eine schematische Darstellung eines Blockschaubilds einer Parametrisierungsvorrichtung 10 für eine Überwachungssystem 1 gemäß einer Ausführungsform. Die Parametrisierungsvorrichtung 10 umfasst eine Verarbeitungseinrichtung 11 zur automatischen Ermittlung einer geeigneten Parametrisierung für die Überwachungseinrichtung 20 des Überwachungssystems 1. Darüber hinaus kann die Parametrisierungsvorrichtung 10 eine Speichereinrichtung 12 umfassen, welche Testdaten für die Ermittlung der Parametrisierungsdaten bereitstellt. Zusätzlich oder alternativ kann in der Parametrisierungsvorrichtung 10 eine Datenschnittstelle 13 vorgesehen sein. Mittels einer solchen Datenschnittstelle 13 können beispielsweise Testdaten oder weitere Daten von einer entfernten Vorrichtung, beispielsweise einem Server in einer Cloud oder ähnlichem empfangen werden. Zusätzlich oder alternativ können auch Daten in Zusammenhang mit dem Optimierungsprozess für die Parametrisierung des Überwachungssystems 1 an eine entfernte Vorrichtung, insbesondere einen Server in der Cloud übertragen werden.

Nachfolgend wird der Vorgang für die automatische Parametrisierung des Überwachungssystems 1 beschrieben.

Die für die Parametrisierung des Überwachungssystems 1, insbesondere die in dem Überwachungssystem 1 eingesetzten Algorithmen erforderlichen Parameter werden in einem sogenannten Parametrisierungsvektor P zusammengefasst. Dabei stellen die einzelnen Elemente des Parametrisierungsvektors P jeweils einen Parameter für die Parametrisierung dar.

Zu Beginn der automatischen Parametrisierung wird zunächst ein initialer Parametrisierungsvektor Pi gebildet. Hierbei können beispielsweise für die einzelnen Elemente des initialen Parametrisierungsvektors Pi zufällige Werte gewählt werden. Alternativ ist es auch möglich, einige oder gegebenenfalls auch alle Elemente des initialen Parametrisierungsvektors Pi durch einen Benutzer vorzugeben. Hierzu kann gegebenenfalls in der Parametrisierungsvorrichtung 10 eine entsprechende Benutzerschnittstelle vorgesehen sein. Auf diese Weise kann ein Benutzer beispielsweise aufgrund von Erfahrungswerten gegebenenfalls initiale Parameter spezifizieren, welche seiner Meinung nach bereits einer geeigneten Parametrisierung nahekommen. Beispielsweise kann der Benutzer Parametrisierungswerte vorgeben, welche in früheren Parametrisierungen bereits zu guten Ergebnissen geführt haben.

Als weitere Alternative können gegebenenfalls auch Vorschläge für initiale Parametrisierungsvektor Pi in der Speichereinrichtung 12 abgespeichert und somit durch die Speichereinrichtung 12 bereitgestellt werden. Beispielsweise können in der Speichereinrichtung 12 eine oder mehrere Parametrisierungsvektoren P abgespeichert werden, welche bereits in früheren Parametrisierungsvorgängen zu einem geeigneten, insbesondere optimalen Parametrisierungsvektor geführt haben. Gegebenenfalls kann ein Benutzer aus mehreren in der Speichereinrichtung 12 abgespeicherten Parametrisierungsvektoren P einen geeigneten initialen Parametrisierungsvektor Pi auswählen.

Nach der Definition des initialen Parametrisierungsvektors Pi wird in einem weiteren Schritt eine Güte G des initialen Parametrisierungsvektors Pi ermittelt. Beispielsweise kann zur Ermittlung der Güte G jeweils eine Genauigkeit der Resultate durch eine gemäß dem initialen Parametrisierungsvektor Pi parametrisierten Überwachungseinrichtung 1 auf Grundlage von vorgegebenen Trainingsdaten ermittelt werden. Diese vorgegebenen Trainingsdaten können beispielsweise ebenfalls in der Speichereinrichtung 12 abgespeichert sein und somit durch die Speichereinrichtung 12 bereitgestellt werden.

Zum Beispiel kann zur Ermittlung der Güte g bestimmt werden, wie groß ein Anteil von korrekt identifizierten Fehlern oder Störungen in den Trainingsdaten gemäß der initialen Parametrisierung Pi ist. Ebenso ist beispielsweise als Maß für die Güte die Bestimmung des Anteils bzw. der Anzahl von fehlerhaft klassifizierten Trainingsdaten möglich. Selbst verständlich sind auch beliebige andere Ansätze zur Ermittlung der Güte auf Grundlage der jeweiligen Trainingsdaten möglich.

Neben einer Verwendung von zuvor generierten und beispielsweise in der Speichereinrichtung 12 abgespeicherten Trainingsdaten ist es grundsätzlich auch möglich, den industriellen Prozess 3 auszuführen und hierbei jeweils die Resultate der Überwachungseinrichtung 10 gemäß der verwendeten Parametrisierung P mit den tatsächlichen Resultaten zu vergleichen.

Nachdem die Güte G für eine gemäß dem initialen Parametrisierungsvektor Pi parametrisiert Überwachungseinrichtung 10 ermittelt worden ist, können die einzelnen Elemente in dem Parametrisierungsvektor P variiert werden. Daraufhin kann für einen entsprechend neugebildeten Parametrisierungsvektor P erneut die Güte G ermittelt werden. Hierzu können vorzugsweise dieselben Trainingsdaten verwendet werden, wie sie zuvor für die Ermittlung der Güte G mit dem initialen Parametrisierungsvektor Pi verwendet worden sind. Gegebenenfalls können auch mehrere Parametrisierungsvektoren P mit unterschiedlichen Variationen in den einzelnen Elementen der Parametrisierungsvektoren P gleichzeitig gebildet werden und für jeden dieser neugebildeten Parametrisierungsvektoren P eine korrespondierende Güte G ermittelt werden.

Daraufhin können die einzelnen Elemente des Parametrisierungsvektors P bzw. der Parametrisierungsvektoren erneut variiert werden. Anschließend kann auch für diese neu gebildete Variation der Parametrisierungsvektor P die Güte G bestimmt werden. Auf diese Weise können gegebenenfalls Tendenz bzw. Trends in der Variation der Güte G entsprechend der Variation der einzelnen Elemente in den gebildeten Parametrisierungsvektor P abgeleitet werden. Derartige Tendenzen bzw. Trends können bei der Bildung weiterer Variationen für die Parametrisierungsvektor P berücksichtigt werden, um die einzelnen Elemente der Parametrisierungsvektor derart anzupassen, dass die resultierende Güte G optimiert wird.

Die zuvor beschriebenen Schritte der Variation der Elemente in dem Parametrisierungsvektor P und die darauffolgende Ermittlung der Güte G kann iterativ so lange wiederholt werden, bis ein vorgegebenes Abbruchkriterium erfüllt ist. Insbesondere kann die Variation der Elemente in dem Parametrisierungsvektor P so lange ausgeführt werden, bis eine resultierende Güte G einen vorgegebenen Schwellwert erreicht oder überschreitet. Gegebenenfalls kann zur Vermeidung von Endlosschleifen auch die maximale Anzahl von Interaktionsschritten begrenzt werden. Bei einem Abbruch aufgrund der maximalen Anzahl von Iterationsschritten kann dabei beispielsweise der Parametrisierungsvektor P gewählt werden, welcher bis zu diesem Zeitpunkt die beste Güte G erzielt hat.

Auf diese Weise wird ein gradientenfreies Verfahren zur Ermittlung eines optimierten Parametrisierungsvektors P implementiert. Grundsätzlich sind auch beliebige andere Gradienten Freiverfahren zur Optimierung des Parametrisierungsvektors P möglich. Als gradientenfreies Optimierungsverfahren können beispielsweise Partikelschwarmoptimierung (Particle Swarm Optimization), ein Verfahren der differentiellen Evolution (Differential Evolution) oder ein beliebiges anderes gradientenfreies Optimierungsverfahren eingesetzt werden.

Figur 4 zeigt ein Ablaufdiagramm, wie es einem Verfahren zur Parametrisierung eines Überwachungssystems 1 für eine industriellen Prozess 3 gemäß einer Ausführungsform zugrunde liegt. Das Verfahren kann grundsätzlich beliebige Verfahrensschritte umfassen, wie sie bereits in Zusammenhang mit den zuvor beschriebenen Ausführungsbeispielen beschrieben worden sind. Analog können auch die zuvor beschriebenen Ausführungsbeispiele beliebige Verfahrensschritte oder Komponenten umfassen, wie sie zur Realisierung des nachfolgend beschriebenen Verfahrens erforderlich sind.

In einem Schritt S1 wird zunächst ein initialer Parametrisierungsvektor bereitgestellt. Die einzelnen Elemente dieses Parametrisierungsvektors können jeweils einen Parameter zur Parametrisierung eines Überwachungs- oder Auswertealgorithmus umfassen.

Anschließend kann einem Schritt S2 ein vorbestimmtes Gütekriterium für eine Parametrisierung gemäß dem initialen Parametrisierungsvektor ermittelt werden. Hierzu können beispielsweise auf einen implementierten Algorithmus gemäß der initialen Parametrisierung vorgegebenen Trainingsdaten angewendet werden. Diese Trainingsdaten können beispielsweise in einem lokal implementierten Speicher oder von einem entfernten Server bereitgestellt werden.

Daraufhin wird in einem Schritt S3 ein gradientenfreies Optimierungsverfahren ausgeführt, um die Elemente des initialen Parametrisierungsvektors zu optimieren und einen optimierten Parametrisierungsvektor zu erhalten. Hierbei werden die Elemente des Parametrisierungsvektors hinsichtlich des vorgegebenen Gütekriterium optimiert. Bei der gradientenfreien Optimierung kann es sich insbesondere um eines der zuvor beschriebenen Verfahren handeln.

Schließlich kann in einem Schritt S4 ein Überwachungssystem 1 gemäß der Parameter des optimierten Parametrisierungsvektors konfiguriert werden.

Zusammenfassend betrifft die vorliegende Erfindung eine automatische Konfiguration eines Überwachungssystems für einen industriellen Prozess. Hierzu wird ein initialer Parametrisierungsvektor zur Konfiguration des Überwachungssystems mittels eines gradientenfreies Optimierungsverfahrens iterativ optimiert.

## Patentansprüche

1. Verfahren zur Parametrisierung eines Überwachungssystems (1) für einen industriellen Prozess (3), mit den Schritten:
Bereitstellen (S1) eines initialen Parametrisierungsvektors;
Ermitteln (S2) eines vorbestimmten Gütekriteriums für den initialen Parametrisierungsvektor;
Ausführen (S3) einer gradientenfreien Optimierung des initialen Parametrisierungsvektors, um einen optimierten Parametrisierungsvektor zu erhalten, wobei die gradientenfreien Optimierung den Parametrisierungsvektor bezüglich des vorbestimmten Gütekriteriums optimiert; und
Konfigurieren (S4) des Überwachungssystems basierend auf dem optimierten Parametrisierungsvektor.

2. Verfahren nach Anspruch 1, wobei die gradientenfreie Optimierung eine Partikelschwarmoptimierung oder ein Verfahren der differentiellen Evolution umfasst.

3. Verfahren nach Anspruch 1, wobei die gradientenfreie Optimierung ein iteratives Ausführen die folgenden Schritte umfasst:
Variieren der Werte des Parametrisierungsvektors; und Ermitteln des vorbestimmten Gütekriteriums für den jeweiligen Parametrisierungsvektor,
wobei die vorgenannten Schritte solange wiederholt werden, bis ein vorbestimmtes Abbruchkriterium erfüllt ist, und wobei das vorbestimmte Abbruchkriterium ein Überschreiten oder Erreichen eines Schwellwerts für das vorbestimmte Gütekriterium umfasst.

4. Verfahren nach Anspruch 3, wobei die gradientenfreie Optimierung in jedem Iterationsschritt mehrere Parametrisierungsvektoren parallel variiert und das vorbestimmte Gütekriterium ermittelt.

5. Verfahren nach einem der Ansprüche 1 bis 4, wobei der initiale Startvektor einen zufällig generierten Startvektor, einen benutzerdefinierten Startvektor oder einen zuvor abgespeicherten Startvektor umfasst.

6. Verfahren nach einem der Ansprüche 1 bis 5, wobei das vorbestimmten Gütekriteriums eine Erkennungsrate für einen vorgegebenen Testdatensatz umfasst.

7. Verfahren nach einem der Ansprüche 1 bis 6, wobei das vorbestimmten Gütekriteriums eine Erkennungsrate von realen Fehlern in einem operationellen industrielen Prozess umfasst.

8. Verfahren nach einem der Ansprüche 1 bis 7, wobei das vorbestimmten Gütekriteriums eine Rückmeldung von einem Benutzer umfasst.

9. Verfahren nach einem der Ansprüche 1 bis 8, wobei das Verfahren zur Parametrisierung des Überwachungssystems (1) bei einer erstmaligen Initialisierung und/oder durch eine manuelle Triggerung erfolgt.

10. Parametrisierungsvorrichtung (10) für ein Überwachungssystem (1) für einen industriellen Prozess (3), mit:
einer Verarbeitungseinrichtung (11), die dazu ausgelegt ist einen initialen Parametrisierungsvektor zu empfangen, ein vorbestimmtes Gütekriterium für den initialen Parametrisierungsvektor zu ermitteln, eine gradientenfreie Optimierung des initialen Parametrisierungsvektors auszuführen, um einen optimierten Parametrisierungsvektor zu erhalten, wobei die gradientenfreien Optimierung den Parametrisierungsvektor bezüglich des vorbestimmten Gütekriteriums optimiert, und den optimierten Parametrisierungsvektor bereitzustellen.

11. Parametrisierungsvorrichtung (10) nach Anspruch 10, mit einer Speichereinrichtung (12), die dazu ausgelegt ist, Testdaten für die Ermittlung des vorbestimmten Gütekriteriums bereitzustellen.

12. Überwachungssystems (1) für einen industriellen Prozess, mit:
einer Eingangsschnittstelle (21), die dazu ausgelegt ist, Sensordaten des industriellen Prozesses (3) zu empfangen;
einer Überwachungseinrichtung (20), die dazu ausgelegt ist, den industriellen Prozess (3) unter Verwendung der empfangenen Sensordaten zu überwachen; und
einer Parametrisierungsvorrichtung (10), die dazu ausgelegt ist, die Überwachungseinrichtung (10) unter Verwendung des optimierten Parametrisierungsvektors zu konfigurieren.

13. Überwachungssystem (1) nach Anspruch 12, mit einer optischen Erfassungseinrichtung (2), die dazu ausgelegt ist, Bilddaten des industrielen Prozesse (3) zu erfassen und die erfassten Bilddaten an der Eingangsschnittstelle (21) bereitzustellen.

14. Überwachungssystem (1) nach Anspruch 12 oder 13, wobei der industrielle Prozess (3) einen additiven Fertigungsprozess und/oder einen Beschichtungsprozess umfasst.
